# EUROPÄISCHE PATENTSCHRIFT

(11) **EP 2 485 916 B1**
(45) Veröffentlichungstag und Bekanntmachung des Hinweises auf die Patenterteilung: **02.12.2015**
(21) Anmeldenummer: 10765421.2
(22) Anmeldetag: 07.10.2010
(51) Int. Cl.: B60L 13/03, B60L 7/00, B66B 11/04

(54) **BEFÖRDERUNGSSYSTEM MIT ELEKTROMAGNETISCHER BREMSE**
CONVEYOR SYSTEM COMPRISING AN ELECTROMAGNETIC BRAKE
SYSTÈME CONVOYEUR À FREIN ÉLECTROMAGNÉTIQUE

(30) Priorität: 09.10.2009 DE 102009048822
(43) Veröffentlichungstag der Anmeldung: 15.08.2012
(73) Patentinhaber: Siemens Aktiengesellschaft, 80333 München (DE)
(72) Erfinder: MATSCHEKO, Gerhard, 82319 Starnberg (DE); JAJTIC, Zeljko, 80992 München (DE)
(86) Internationale Anmeldenummer: PCT/EP2010/064978
(87) Internationale Veröffentlichungsnummer: WO 2011/042487

(56) Entgegenhaltungen:
- EP-A1- 0 785 162
- EP-A1- 1 168 586
- WO-A1-03/064310
- WO-A1-2007/003601
- WO-A2-98/58866
- DE-A1- 3 422 374
- DE-A1-102006 014 616
- GB-A- 2 437 949

## Beschreibung

Die vorliegende Erfindung betrifft ein Beförderungssystem mit den Merkmalen gemäß Oberbegriff des Anspruchs 1.

Aus dem Stand der Technik sind verschiedene Beförderungssysteme bekannt, mit denen Personen oder Güter von einem ersten Höhenniveau zu einem zweiten Höhenniveau transportiert werden können. Aufzüge oder Kräne haben einen rein vertikal gerichteten Verfahrweg. Bergbahnen wie z.B. Zahnradbahnen bringen bei der Überwindung eines Höhenunterschiedes hingegen auch eine signifikante horizontale Distanz hinter sich. Sowohl rein vertikal gerichtete Verfahrwege als auch Verfahrwege, die eine endliche Steigung aufweisen, um einen Höhenunterschied zu überwinden., deren primäre Zielsetzung jedoch die Überwindung besagter Höhendifferenz ist, werden in dieser Anmeldung unter dem Begriff eines im Wesentlichen vertikal gerichteten Verfahrweges subsumiert.

Die meisten der angesprochenen Beförderungssysteme sind heute mit einem rotatorisch wirkenden Elektromotor und einem Seilzugsystem ausgestattet, mit dem die rotatorische Bewegung des Elektromotors in eine translatorische Bewegung der entsprechenden Transporteinrichtung umgewandelt wird. Derartige Systeme sind relativ kompliziert in ihrem Aufbau und voluminös.

Hingegen ist aus der DE 10 2005 017 500 A1 ein Personenfördersystem mit einem Synchronlinearmotor bekannt. Um ein solches Personenfördersystem einfacher und kostengünstiger zu gestalten, wird hier vorgeschlagen, dass Personenfördersystem zum Antrieb mit einem Synchronlinearmotor mit zahnstangenförmigen, permanentmagnetlosem Sekundärteil auszustatten, wobei das Primärteil des Synchronlinearmotors an der Transporteinrichtung, in oder auf der Personen beförderbar sind, befestigt wird. Das Primärteil umfasst Spulen und Permanentmagnete zur Erzeugung magnetischer Felder, die miteinander in Wechselwirkung stehen, um den Linearmotor und damit die Transporteinrichtung anzutreiben. Das Sekundärteil ist permanentmagnetlos und somit sehr robust gegenüber Verschmutzungen. Ein derartiger Linearmotor ist systembedingt als Kurzstatormotor ausgeführt, wobei unter dem Begriff Stator bei einem Linearmotor hier sowie in der gesamten Anmeldung unabhängig davon, ob sich der Stator bewegt oder ob er still steht, das mit einem Ankerstrom bestrombare Element bezeichnet ist. Ein derartiger Linearmotor ist im Vergleich zu üblichen Linearmotoren, bei denen Permanentmagnete im Sekundärteil angeordnet sind, deutlich kostengünstiger. Dieser Kostenvorteil macht sich insbesondere bei langen Verfahrwegen bemerkbar, die eine große räumliche Ausdehnung des Sekundärteils erfordern.

Dadurch, dass die Seilantriebe, die bei rotatorischen Systemen benötigt werden, entfallen, mangelt es bei linearmotorangetriebenen Beförderungssystemen auch zwangläufig an den mit den Seilantrieben zum Teil gekoppelten Betriebs- und Sicherheitsbremseinrichtungen.

Die EP 0 785 162 A1 beschreibt ein Antriebssystem für Aufzüge, das einen einseitigen flachen Permanentmagnet-Linearsynchronmotor verwendet. Das mit Permanentmagneten bestückte Sekundärelement wird am Schacht, das mit Spulen versehene Primärelement an der Kabine angeordnet. Das Sekundärelement kann auch anstatt an dem Schacht an der Kabine angeordnet sein und das Primärelement entsprechend anstatt an der Kabine an dem Schacht angeordnet sein. Im Falle eines plötzlichen Stromausfalls des Permanentmagnet-Linearsynchronmotors können die Spulen des Primärelements in Kurzschlussstellung gebracht werden und als dynamische Bremse arbeiten. Die in den Kurzschlusswindungen des im Generatorbetrieb arbeitenden Permanentmagnet-Linearsynchronmotors erzeugte Bremskraft begrenzt die Absinkgeschwindigkeit der voll belasteten Kabine. Diese Anordnung hat den Vorteil, dass bei einem Stromausfall die Kabine ohne Verwendung von zusätzlichen Notstromaggregaten (bspw. Batterien) automatisch in das unterste Stockwerk gefahren werden kann. Die EP 0 785 162 A1 schlägt ausgehend von Nachteilen verschiedener beschriebener Linearmotoren für Antriebssysteme eines Aufzuges die Verwendung eines Permanentmagnet-Linearsynchronmotor vor, um die genannten Nachteile zu vermeiden. Für einen beschriebenen flachen Linearinduktionsmotor wird der Nachteil genannt, dass er nur relativ niedrige Fahrgeschwindigkeiten erlaubt und mit einem niedrigen Wirkungsgrad arbeitet.

Die DE 10 2006 014616 A1 beschäftigt sich mit dem Problem, dass das Leistungsfeld eines Linearmotors besser an spezifische Anwendungen angepasst werden kann. Dazu ist vorgesehen, dass das Sekundärteil in Verfahrrichtung des Primärteils mindestens in einen ersten und einen zweiten Abschnitt unterteilt wird. Das Sekundärteil ist in dem ersten Abschnitt gegenüber dem zweiten Abschnitt anders geformt und/oder aus einem anderen Material gebildet. Hierdurch lassen sich unterschiedliche Geschwindigkeiten des Primärteils über der Verfahrstrecke unabhängig von der Primärteilansteuerung realisieren. Gegebenenfalls können in einem Sekundärteilabschnitt Kurzschlusswicklungen eingefügt werden, so dass dieser Sekundärteilabschnitt zum passiven Bremsen dient. Gemäß der DE 10 2006 014616 A1 lassen sich die in der DE 10 2006 014616 A1 beschriebenen Linearmotoren speziell im Bereich der Förder- und Automatisierungstechnik vorteilhaft einsetzen, denn dort sind häufig Verfahrabschnitte mit niedriger und hoher Geschwindigkeit notwendig. Konkrete Beispiele hierfür wären Gepäckförderanlagen, Sortieranlagen, automatische Flurförderer, Fahrgeschäfte usw.

Der Erfindung liegt daher die Aufgabe zugrunde, die Betriebssicherheit eines mit einem Linearmotor angetriebenen Beförderungssystems zu erhöhen.

Diese Aufgabe wird durch ein Beförderungssystem mit den Merkmalen gemäß Patentanspruch 1 gelöst.

Vorteilhafte Ausführungsformen sind den abhängigen Patentansprüchen zu entnehmen.

Die Erfindung macht sich die Eigenschaft permanenterregter Motoren zunutze, ohne externe Energiezufuhr eine Bremskraft entwickeln zu können, wenn eine auch bei diesen Motoren vorhandene Wicklung kurzgeschlossen wird. Um im Normalbetrieb einen möglichst hohen elektrischen Wirkungsgrad zu erzielen, sind die Wicklungen herkömmlicher permanenterregter Motoren derart ausgelegt, dass die durch den Wicklungskurzschluss hervorgerufene Bremskraft nur ca. 1/5 bis 1/3 der maximalen Vorschubkraft des Motors erreicht. Dies gilt sowohl für rotatorisch arbeitende Motoren als auch für die hier im Vordergrund stehenden Linearmotoren. Bei einer wirtschaftlichen Auslegung des Antriebssystems für ein Beförderungssystem, dessen Transporteinrichtung längs eines im Wesentlichen vertikal gerichteten Verfahrweges bewegbar ist, reicht diese Bremskraft im Allgemeinen nicht aus. Dies gilt insbesondere für Aufzüge, die einen rein vertikal gerichteten Verfahrweg besitzen.

Das Sekundärteil des Linearmotors, der für den Antrieb innerhalb des erfindungsgemäßen Beförderungssystems sorgt, besitzt ein zahnstangenförmiges Profil. Bevorzugt ist es permanentmagnetfrei ausgeführt und zur Reduzierung von Eisenverlusten aus einzelnen voneinander elektrisch isolierten Elektroblechen aufgebaut. Bei der Bewegung des permanenterregten Primärteils findet im Sekundärteil ein magnetischer Wechselfluss statt.

Dieser Wechselfluss findet auch dann statt, wenn das Beförderungssystem einem kompletten Stromausfall unterliegt, da die im Primärteil angeordneten Permanentmagnete keine Stromversorgung zur Erzeugung des Erregerfeldes benötigen. Ein solcher Stromausfall stellt einen Störfall dar, bei dem die Transporteinrichtung zur Vermeidung von Personen- und/oder Sachschäden abgebremst werden muss. Erfindungsgemäß geschieht dies dadurch, dass an dem Sekundärteil die Bremswicklungen derart angeordnet sind, dass das magnetische Feld der Permanentmagnete während einer aufgrund des Eigen- und Zuladungsgewichts nach unten gerichteten Bewegung der Transporteinrichtung eine Spannung in der besagten Bremswicklung induziert. Wenn die Bremswicklung elektrisch kurzgeschlossen oder anderweitig aktiviert wird, erzeugt diese induzierte Spannung einen Kreisstrom ("Wirbelstrom"), was der Ursache der induzierten Spannung, nämlich der Abwärtsbewegung der Transporteinrichtung, entgegenwirkt. Es entsteht also eine Bremskraft wie bei einer Wirbelstrombremse und zwar völlig unabhängig von der Energieversorgung des Antriebs. Von der Bremswicklung wird also auf elektromagnetischem Wege die gewünschte Bremskraft erzeugt, mit der ein unkontrollierter Absturz der Transporteinrichtung im Störfall (z.B. Stromausfall) vermieden wird.

Bei der am Sekundärteil angeordneten Bremswicklung handelt es sich um eine zusätzliche Motorkomponente, die in keiner Weise zum Antrieb des Linearmotors Verwendung findet. Primärwicklung und Permanentmagnete können daher völlig unabhängig von der Bremswicklung im Hinblick auf einen optimalen Motorbetrieb, z.B. bzgl. eines hohen Wirkungsgrades oder eines minimalen Primärteilgewichts, ausgelegt werden.

Das zahnstangenförmige Profil des Sekundärteils ermöglicht in bevorzugter Ausgestaltung der Erfindung eine sehr einfache Konstruktion, bei der die Bremswicklung auf zumindest einigen Zähnen des Sekundärteils in Gestalt von einzelnen oder mehreren in Reihe geschalteten Zahnspulen angeordnet ist. Die Zahnspulen können auch in herkömmlicher Weise wie bei üblichen mehrphasigen Statorwicklungen in Stern- oder Dreieckschaltung verschaltet werden, wodurch insbesondere in einer konkreten bestehenden Anlage der Verdrahtungsaufwand zur Schaltung der Bremswicklung reduziert werden kann.

Befindet sich der Linearmotor nicht im Bremsbetrieb, so muss die Bremswicklung im Leerlauf betrieben werden, um keine unerwünschte Bremskraft zu erzeugen. Zum Umschalten in den Bremsbetrieb umfasst das Beförderungssystem einen Schalter zum Schalten der Bremswicklung in einen Kurzschluss oder zur Beschaltung der Bremswicklung mit einem Kondensator, wobei insbesondere parallel oder in Reihe zu dem Kondensator ein Bremswiderstand angeordnet ist. Hierbei ist der Schalter derart konfiguriert, dass die Bremswicklung in einem stromlosen Zustand des Beförderungssystems kurzgeschlossen oder mit dem Kondensator bzw. der Reihen- oder Parallelschaltung aus dem Kondensator und dem Bremswiderstand beschaltet ist. Dadurch ist sichergestellt, dass in jedem Störfall der Linearmotor in den Betriebszustand "Bremsen" geht. Wenn beispielsweise die komplette Stromversorgung des Beförderungssystems ausfällt, kann durch die beschriebene Konfiguration des Schalters sichergestellt werden, dass die Bremswirkung der kurzgeschlossenen Bremswicklung oder der mit dem Kondensator bzw. der Reihen- oder Parallelschaltung aus dem Kondensator und dem Bremswiderstand beschalteten Bremswicklung stets vorhanden ist und somit die Transporteinrichtung nicht unkontrolliert durch Eigen- und Zuladungsgewicht nach unten fällt.

Sobald der Schalter im Störfall geschlossen wird, entwickelt die Bremswicklung eine geschwindigkeitsabhängige Bremskraft. Diese folgt einer Kraft-Geschwindigkeitskennlinie, die durch geeignete Dimensionierung des Bremssystems vorzugsweise derart konfiguriert ist, dass die Transporteinrichtung möglichst kontrolliert und sanft abbremst. Beispielsweise kann es zur Erzielung einer optimalen Bremskennlinie vorteilhaft sein, den Kondensator so zu wählen, dass er zusammen mit der Induktivität der Bremswicklung bei einer gewünschten Geschwindigkeit der Transporteinrichtung eine Resonanzfrequenz bildet. Bei einer derartigen bevorzugten Wahl des Kondensators heben sich bei dieser Geschwindigkeit die Impedanzen der Bremswicklung und des Kondensators gerade auf, so dass die Wechselstromimpedanz der mit dem Kondensator und dem Bremswiderstand beschalteten Bremswicklung einzig durch den Bremswiderstand bestimmt wird. In diesem Betriebsfall fällt die komplette induzierte Spannung am Bremswiderstand ab. Im Bremswiderstand wird somit ein Maximum an Energie in Wärme umgewandelt.

Das erfindungsgemäße elektromagnetische Bremssystem entfaltet nur bei einer Bewegung des Primärteils seine Wirkung, da nur bei Bewegung des Primärteils eine Induktionswirkung in der Bremswicklung erzeugt wird. Entsprechend wird das Beförderungssystem bevorzugt mit einem Pufferelement zur mechanischen Abbremsung der Transporteinrichtung bis zum vollständigen Stillstand ausgeführt, wobei das Pufferelement an einem unteren Ende des im Wesentlichen vertikalen Verfahrweges angeordnet ist. Bei dieser vorteilhaften Ausführungsform der Erfindung kommt die Transporteinrichtung stets in der untersten Endlage des Verfahrweges zum Stillstand. Dies ist beispielsweise bei Beförderungssystemen, die als Aufzug, insbesondere als Personenaufzug, ausgeführt sind, besonders vorteilhaft, da die Fahrgäste in diesem Fall stets an einer definierten Stelle im tiefsten Geschoss aussteigen können. Bei aus dem Stand der Technik bekannten Personenaufzügen kommt die Fahrgastkabine im Störfall in der Regel an einer beliebigen Stellung im Schacht zum Stehen, so dass die Personen erst dann aussteigen können, wenn das Servicepersonal die Fahrkabine zu einer Aufzugstür befördert.

Die erfindungsgemäße elektromagnetische Bremse arbeitet passiv, berührungsfrei, zuverlässig, verschleiß- und wartungsfrei und eignet sich somit hervorragend für sicherheitsrelevante Aufgaben. Bevorzugt besteht das Bremssystem lediglich aus zwei sehr robusten und zuverlässigen Hardwarekomponenten, nämlich einer stationären Wicklung, der Bremswicklung, und einem im stromlosen Zustand geschlossenen Kurzschlussschalter. Die Wirksamkeit eines derartigen Bremssystems kann zudem jederzeit automatisch und ohne Verschleiß im regulären Aufzugsbetrieb, beispielsweise bei einer Leerfahrt, überprüft und nachgewiesen werden.

Im Folgenden wird die Erfindung anhand der in den Figuren dargestellten Ausführungsbeispiele näher beschrieben und erläutert. Es zeigen:
- FIG 1: eine schematische Darstellung eines Aufzugssystems ausgestaltet gemäß einer Ausführungsform der Erfindung,
- FIG 2: eine Abhängigkeit der Bremskraft von der Sinkgeschwindigkeit einer Transporteinrichtung eines Beförderungssystems gemäß einer Ausführungsform der Erfindung, und
- FIG 3: eine schematische Darstellung eines weiteren Aufzugssystems ausgestaltet gemäß einer weiteren Ausführungsform der Erfindung.

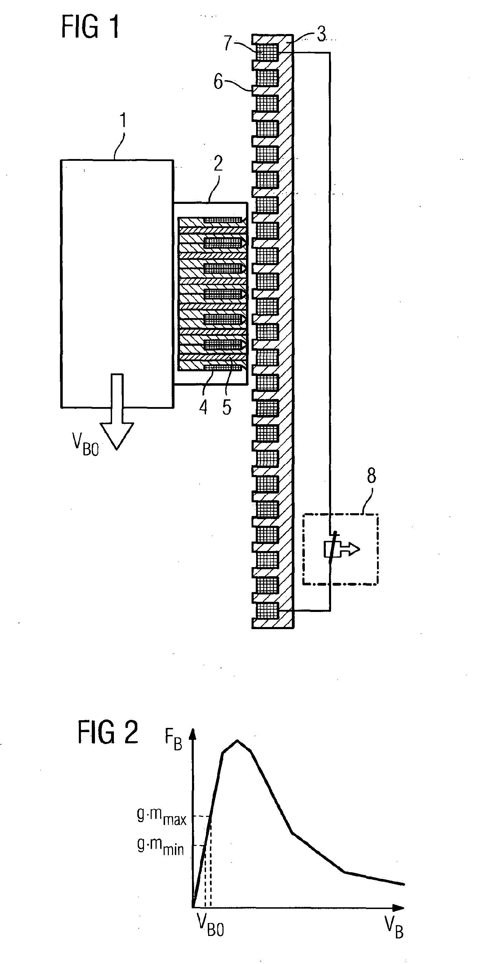

FIG 1 zeigt eine schematische Darstellung eines Aufzugsystems ausgestaltet gemäß einer Ausführungsform der Erfindung. Dieses spezielle Beförderungssystem umfasst eine Transporteinrichtung 1, die als Personenbeförderungskabine ausgestaltet ist. An dieser Transporteinrichtung 1 ist ein Primärteil 2 eines Linearmotors angeordnet. Ein zugehöriges Sekundärteil 3 befindet sich in einem Aufzugsschacht. Das Sekundärteil 3 ist längs eines in dieser speziellen Anwendung rein vertikal ausgerichteten Verfahrweges angebracht. Das Sekundärteil 3 besitzt eine Zahnstangenstruktur. D.h., Zähne 6 und Nuten, die zwischen jeweils zwei Zähnen 6 angeordnet sind, wechseln sich längs des Verfahrweges betrachtet ab. Das Sekundärteil 3 ist aus einzelnen elektrisch voneinander isolierten Elektroblechen aufgebaut, um Eisenverluste im Sekundärteil 3 möglichst gering zu halten. Das Sekundärteil 3 ist darüber hinaus vollkommen permanentmagnetfrei ausgestaltet. Die magnetischen Felder zur Erzeugung einer Vorschubkraft werden einzig und allein durch das Primärteil 2 erzeugt.

Hierzu umfasst das Primärteil 2 eine Primärwicklung 4, die ebenfalls in Form von Zahnspulen ausgeführt ist, und auf Zähnen des Primärteils 2 aufgebracht ist. In der Mitte jedes Zahnes des Primärteils 2 befindet sich ein Permanentmagnet 5. Dieser Permanentmagnet 5 ist jeweils längs der Spulenachse jeder Zahnspule angeordnet. Das Motorprinzip basiert auf dem magnetischen "Erregerfeld" der Permanentmagnete 5 und dem magnetischen "Ankerfeld" der bestromten Primärteilwicklung 4, die in Wechselwirkung mit der gezahnten Sekundärteilstruktur stehen und somit die magnetische Vorschubkraft des Linearmotors erzeugen.

Dadurch, dass innerhalb des Sekundärteils 3 keinerlei Permanentmagnete angeordnet sind, ist der dargestellte Lihearmotor besonders robust gegenüber Umwelteinflüssen. Da das Sekundärteil 3 räumlich sehr weit ausgedehnt ist, nämlich entlang des kompletten Verfahrweges, ist es sehr viel kostengünstiger herzustellen als ein Sekundärteil eines herkömmlichen Linearmotors, bei dem die Permanentmagnete im Sekundärteil 3 angeordnet sind und lediglich die Spulen der Primärwicklung 4 im Primärteil 2.

Um eine Bremswirkung mit dem Linearmotor erzielen zu können, insbesondere auch in einem Störfall, ist am Sekundärteil 3 eine Bremswicklung 7 angebracht. Diese besteht aus einzelnen Zahnspulen, die über die Zähne 6 des Sekundärteils 3 geschoben sind. Die Zahnspulen 7 sind in einzeln oder in Reihe geschaltet oder in mehreren Gruppen in Reihe geschaltet. Innerhalb dieser Reihenschaltung der Zahnspulen befindet sich ferner ein Schalter 8, der nur zum Abbremsen der Transporteinrichtung 1 geschlossen ist. Während des störungsfreien Betriebes der Transporteinrichtung 1 befinden sich die Zahnspulen der Bremswicklung 7 im Leerlauf.

Der Schalter 8 ist derart konfiguriert, dass er aktiv geöffnet werden muss und somit im stromlosen Zustand geschlossen ist. Hierdurch ist sichergestellt, dass beispielsweise bei einem Stromausfall die Bremswicklung 7 auf jeden Fall kurzgeschlossen ist und somit die Transporteinrichtung 1 nicht unkontrolliert nach unten fallen kann.

Soll nun die Transporteinrichtung 1 mit Hilfe der Bremswicklung 7 abgebremst werden, wird der Schalter 8 geschlossen. Die Permanentmagnete 5 induzieren aufgrund der Sinkgeschwindigkeit der Transporteinrichtung 1 und der damit verbundenen translatorischen Bewegung des Primärteils eine Spannung in der Bremswicklung 7. Hierdurch wird ein Strom in der Bremswicklung 7 induziert, der seinerseits ein Magnetfeld erzeugt, welches mit dem Magnetfeld der Permanentmagnete 5 wechselwirkt. Diese Wechselwirkung ist derart gestaltet, dass sie ihrer Ursache, der Sinkgeschwindigkeit der Transporteinrichtung 1, entgegenwirkt. Mit anderen Worten bremst das Feld der Bremswicklung 7 die Transporteinrichtung 1 ab.

Die beschriebene elektromagnetische Bremswirkung entsteht naturgemäß jedoch nur, wenn die Transporteinrichtung 1 in Bewegung ist. Zum endgültigen Abbremsen der Transporteinrichtung 1 in den Stillstand umfasst das dargestellte Beförderungssystem ferner ein hier nicht dargestelltes Pufferelement, welches die Transporteinrichtung bis zum vollständigen Stillstand mechanisch abbremst. Dieses Pufferelement ist im unteren Bereich des Verfahrweges, d.h. am unteren Ende des Aufzugschachtes, angeordnet.

FIG 2 zeigt eine Abhängigkeit der Bremskraft F_{B} von der Sinkgeschwindigkeit V_{B} einer Transporteinrichtung eines Beförderungssystems gemäß einer Ausführungsform der Erfindung. Durch die bremsoptimierte Auslegung und Beschaltung der Bremswicklung kann die erforderliche Bremskraft bzw. die erforderliche Bremskennlinie F(v) erreicht und so eingestellt werden, dass beladungsunabhängig immer ein gefahrlos langsames Absinken der Transporteinrichtung mit einer konstanten und definierten Sinkgeschwindigkeit sichergestellt ist. Die Auslegung der Bremswicklung zur Erzielung der gewünschten Sinkgeschwindigkeit ist völlig unabhängig von der Auslegung des Linearmotors zur Erzeugung der gewünschten Vorschubkraft. Somit kann der Linearmotor gleichzeitig auf einen optimalen Wirkungsgrad getrimmt werden und bezüglich der gewünschten Bremskraft optimiert werden.

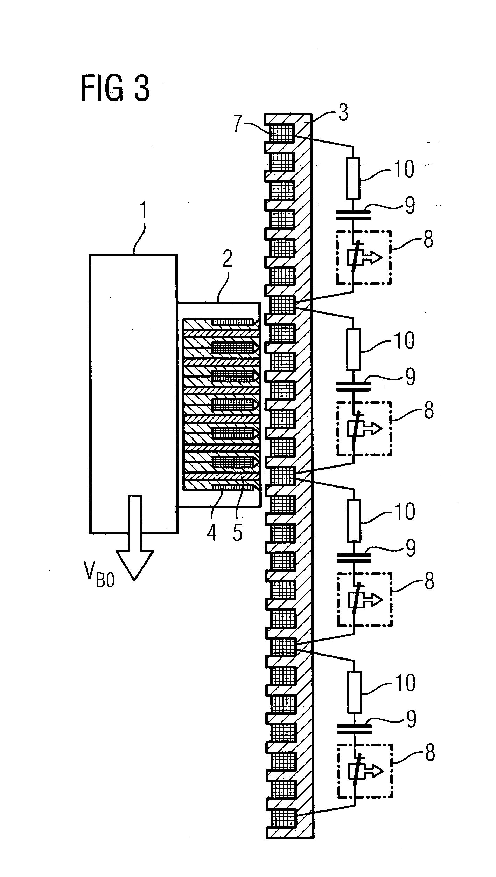

FIG 3 zeigt eine schematische Darstellung eines weiteren Aufzugssystems ausgestaltet gemäß einer weiteren Ausführungsform der Erfindung. Systemkomponenten, die denen aus FIG 1 entsprechen, sind konsequenterweise mit den gleichen Bezugszeichen versehen worden.

Das Motorenprinzip des verwendeten Linearmotors und dessen Anordnung entspricht dem gemäß FIG 1. Im Unterschied zu FIG 1 ist das Sekundärteil 3 aus vier aneinander gereihten einheitlichen Längenmodulen aufgebaut. Jedes dieser Längenmodule besitzt eine Bremswicklung 7. Jedes dieser Längenmodule ist ferner so dimensioniert, dass eine gewünschte Geschwindigkeits-Bremskraftkennlinie erreicht wird. Auf diese Art und Weise kann ein einmal ausgelegtes System modular für verschiedene Schachtlängen verwendet werden, wobei die Entfaltung der Bremskraft unabhängig von der Schachtlänge derselben Kraft-Geschwindigkeitskennlinie folgt.

Jedes Längenmödul umfasst einen Schalter 8, mit dem die zugehörige Bremswicklung 7 auf eine Reihenschaltung bestehend aus einem Kondensator 9 und einem Bremswiderstand 10 geschaltet werden kann. Im Normalbetrieb des Aufzugssystems ist der Schalter 8 geöffnet, so dass sich die Bremswicklung 7 im Leerlauf befindet. Im Störfall schaltet der Schalter 8 die Bremswicklung 7 auf die dargestellte Reihenschaltung. Der Kondensator 9 ist hierbei so bemessen, dass er bei einer gewünschten Sinkgeschwindigkeit der Aufzugskabine im Störfall die Induktivität der Bremswicklung 7 gerade eliminiert. Die induzierte Spannung fällt daher vollständig am Bremswiderstand 10 ab. Die durch das Sinken der Transporteinrichtung 1 vorhandene kinetische Energie wird somit im Bremswiderstand 10 komplett in Wärme umgewandelt.

Alternativ ist auch eine Beschaltung der Bremswicklung 7 denkbar, bei der der Bremswiderstand 10 parallel zu dem Kondensator 9 geschaltet ist.

Die erfindungsgemäße Anordnung einer Bremswicklung am Sekundärteil entfaltet ihre Wirkung nur mit dem in dieser Anmeldung vorgeschlagenen Linearmotorprinzip, bei dem die Permanentmagnete zur Erzeugung des "Erregerfeldes" im Gegensatz zu herkömmlichen Linearmotoren im Primärteil angeordnet sind. Denn nur so ist es möglich, im Störfall die gewünschte induzierte Bremswirkung zu erzielen. Werden die Permanentmagnete im Sekundärteil angeordnet, wie es bei gängigen Linearmotoren der Fall ist, würde praktisch keine Bremswirkung im Störfall entstehen. Das hier vorgeschlagene Motorenprinzip hat daher einen Systemvorteil gegenüber herkömmlichen Linearmotoren.

Die Vorteile des erfindungsgemäßen Bremssystems machen sich insbesondere bei rein vertikal arbeitenden Beförderungssystemen bemerkbar, da hier ein sicheres Bremsen insbesondere im Hinblick auf Personensicherheit besonders wichtig ist. Jedoch können auch Beförderungssysteme sehr vorteilhaft mit einem derartigen Bremssystem ausgestaltet werden, die mit einer endlichen Steigung einen Höhenunterschied überwinden. So ist es beispielsweise denkbar und von der Erfindung umfasst, eine Bergbahn mit dem dargestellten Antriebs- und Bremssystem auszustatten, die entlang eines Verfahrweges mit einer hohen aber endlichen Steigung Personen oder Güter transportiert.

## Patentansprüche

1. Beförderungssystem mit
- einer Transporteinrichtung (1), die längs eines im Wesentlichen vertikal gerichteten Verfahrweges bewegbar ist, und
- einem Linearmotor mit einem an der Transporteinrichtung (1) angeordneten Primärteil (2) und einem längs des Verfahrweges angeordneten Sekundärteil (3),
- wobei das Primärteil (2) eine Primärwicklung (4) **aufweist, wobei das Beförderungssystem als Aufzug, insbesondere als Personenaufzug, ausgeführt ist,**
**dadurch gekennzeichnet, dass**
- **das Primärteil (2)** mindestens einen Permanentmagneten (5) aufweist und
- wobei das Sekundärteil (3) in Richtung des Verfahrweges ein Profil aufweist, welches alternierend angeordnete Nuten und Zähne (6) umfasst,
**wobei** am Sekundärteil (3) eine Bremswicklung (7) derart angeordnet ist, dass sie durch Wechselwirkung mit den Permanentmagneten (5) eine Bremskraft zum Abbremsen der Transporteinrichtung (1) erzeugen kann, wobei das Beförderungssystem einen Schalter (8) aufweist zum Schalten der Bremswicklung (7) in einen Kurzschluss oder zur Beschaltung der Bremswicklung (7) mit einem Kondensator, wobei insbesondere parallel oder in Reihe zu dem Kondensator ein Bremswiderstand angeordnet ist, **wobei der Schalter (8) derart konfiguriert ist, dass die Bremswicklung (7) in einem stromlosen Zustand des Beförderungssystems kurzgeschlossen oder mit dem Kondensator beschaltet ist.**

2. Beförderungssystem nach Anspruch 1,
wobei das Sekundärteil (3) permanentmagnetfrei ausgeführt ist.

3. Beförderungssystem nach Anspruch 1 oder 2,
wobei die Bremswicklung (7) auf zumindest einigen Zähnen des Sekundärteils (3) in Gestalt von einzelnen oder mehreren in Reihe geschalteten Zahnspulen angeordnet ist.

4. Beförderungssystem nach einem der vorhergehenden Ansprüche mit einem Pufferelement zur mechanischen Abbremsung der Transporteinrichtung bis zum vollständigen Stillstand, wobei das Pufferelement an einem unteren Ende des im Wesentlichen vertikalen Verfahrweges angeordnet ist.

## Claims

1. Conveyor system comprising
- a transport device (1) that can be moved along a substantially vertical path of travel and
- a linear motor comprising a primary part (2) arranged on said transport device (1) and a secondary part (3) arranged along the path of travel,
- wherein the primary part (2) has a primary winding (4), wherein the conveyor system is embodied as an elevator, in particular a passenger elevator,
**characterised in that**
- the primary part (2) has at least one permanent magnet (5) and
- wherein the secondary part (3) has a profile in the direction of the path of travel, comprising alternately arranged grooves and teeth (6),
wherein a brake winding (7) is arranged on the secondary part (3) such that it can generate a braking force by interacting with the permanent magnet (5) to brake said transport device (1), wherein the conveyor system has a switch (8) for switching the brake winding (6) to a short circuit or for connecting the brake winding (6) to a capacitor, wherein a braking resistor is arranged in particular in parallel or in series with the capacitor, wherein the switch (8) is configured such that the brake winding (6) is short-circuited or connected to the capacitor when the conveyor system is in a currentless state.

2. Conveyor system according to claim 1,
wherein the secondary part (3) is of a permanent-magnet-free design.

3. Conveyor system according to claim 1 or 2,
wherein the brake winding (6) is arranged on at least some teeth of the secondary part (3) in the form of single or multiple tooth coils connected in series.

4. Conveyor system according to one of the preceding claims comprising a buffer element for mechanically braking the transport device to a complete standstill, wherein the buffer element is arranged at a lower end of the substantially vertical path of travel.

## Revendications

1. Système convoyeur comprenant
- un dispositif (1) de transport, qui peut se déplacer le long d'un trajet de déplacement dirigé sensiblement verticalement, et
- un moteur linéaire ayant une partie (2) primaire mise sur le dispositif (1) de transport et une partie (3) secondaire mise le long du trajet de déplacement,
- dans lequel la partie (2) primaire a un enroulement (4) primaire, le système convoyeur étant réalisé sous la forme d'un ascenseur, notamment d'un ascenseur de personnes,
**caractérisé en ce que**
- la partie (2) primaire a au moins un aimant (5) permanent, et
- dans lequel la partie (3) secondaire a, dans la direction du trajet de déplacement, un profil qui comprend des rainures et des dents (6) disposées en alternance,
dans lequel il est monté à la partie (3) secondaire un enroulement (7) de frein de manière à pouvoir produire par une interaction avec les aimants (5) permanents une force de frein pour freiner le dispositif (1) de transport, le système convoyeur ayant un commutateur (8) pour mettre l'enroulement (7) de frein en court-circuit ou pour connecter l'enroulement (7) de frein à un condensateur, une résistance de frein étant montée, notamment en parallèle ou en série avec le condensateur, le commutateur (8) étant configuré de manière à court-circuiter l'enroulement (7) de frein dans un état sans courant du système convoyeur ou à le connecter au condensateur.

2. Système convoyeur suivant la revendication 1, dans lequel la partie (3) secondaire est réalisée sans aimant permanent.

3. Système convoyeur suivant la revendication 1 ou 2, dans lequel l'enroulement (7) de frein est disposé sur au moins quelques dents de la partie (3) secondaire, en conformation avec des bobines à dent individuelles ou avec plusieurs bobines à dent montées en série.

4. Système convoyeur suivant l'une des revendications précédentes, comprenant un élément tampon pour le freinage mécanique du dispositif de transport jusqu'à l'arrêt complet, l'élément tampon étant monté à une extrémité inférieure du trajet de déplacement sensiblement vertical.
